# EUROPÄISCHE PATENTSCHRIFT

(11) **EP 2 894 448 B1**
(45) Veröffentlichungstag und Bekanntmachung des Hinweises auf die Patenterteilung: **31.07.2019**
(21) Anmeldenummer: 14197540.9
(22) Anmeldetag: 12.12.2014
(51) Int. Cl.: G01L 3/06, G01P 3/36, G01L 5/00, G01L 3/08

(54) **Vorrichtung zur Erfassung des Zustands eines Maschinenelements**
Device for detecting the status of a machine element
Dispositif de détection de l'état d'un élément de machine

(30) Priorität: 08.01.2014 DE 102014100124
(43) Veröffentlichungstag der Anmeldung: 15.07.2015
(73) Patentinhaber: CLAAS Selbstfahrende Erntemaschinen GmbH, 33428 Harsewinkel (DE)
(72) Erfinder: Dähne, Götz, 12589 Berlin (DE); Ellermann, Klaus Martin, 32791 Lage (DE)
(74) Vertreter: CLAAS Gruppe

(56) Entgegenhaltungen:
- DE-A1- 3 002 947
- DE-A1- 19 817 886
- JP-A- S58 103 630
- JP-A- 2007 010 398
- US-A- 2 260 036

## Beschreibung

Die Erfindung betrifft eine Vorrichtung gemäß dem Oberbegriff des Anspruchs 1. Daneben betrifft die Erfindung eine landwirtschaftliche Arbeitsmaschine gemäß Anspruch 12.

An landwirtschaftlichen Arbeitsmaschinen wie Schleppern, Erntemaschinen, Anbaugeräten und dergleichen kommen drehbare Maschinenelemente, insbesondere (Antriebs-) Wellen in unterschiedlichsten Anwendungsformen zum Einsatz, um verschiedenste Aggregate anzutreiben beziehungsweise um ganz allgemein mechanische Antriebsleistung zwischen diesen zu übertragen. Dabei besteht - wie auch in anderen Bereichen des Maschinenbaus - abhängig vom jeweiligen Einsatzzweck oftmals der Bedarf, ein von dem Maschinenelement (insbesondere einer Welle) übertragenes Drehmoment ermitteln zu können.

Bekanntermaßen kann dies durch eine Erfassung der Torsion des Maschinenelements selbst erfolgen. Denn aus der Torsion, also der elastischen Verdrehung des Maschinenelements, lässt sich - eine Kenntnis der Materialeigenschaften und Geometrie des Maschinenelements vorausgesetzt - ein auf das Maschinenelement wirkendes Torsionsmoment berechnen. Im Fall einer Welle lässt sich so beispielsweise das durch die Welle übertragene Drehmoment ermitteln, welches betragsmäßig dem auf das Maschinenelement einwirkenden Torsionsmoment entspricht.

Die Torsion eines rotierenden Maschinenelements lässt sich von einer ruhenden Sensoranordnung grundsätzlich dadurch erfassen, dass an zwei axial voneinander beabstandeten Bereichen des Maschinenelements eine sehr genaue Erfassung des jeweiligen Drehwinkels des Maschinenelements erfolgt. Durch gleichzeitigen Vergleich der Drehwinkel in den beabstandeten Bereichen kann eine Torsion des Maschinenelements ermittelt werden. Nachteilig an dieser Methode ist der erforderliche Aufwand für eine Drehwinkelerfassung an zwei voneinander beabstandeten Stellen - u.a. im Hinblick auf Bauraum und Kosten -. Daneben lässt sich bei höheren Drehzahlen eine exakte Messung nicht oder nur mit erheblichem messtechnischen Aufwand durchführen.

Andererseits ist es möglich, das von dem Maschinenelement übertragene Drehmoment durch Torsionsmessung am rotierenden Maschinenelement zu erfassen, beispielsweise mit Hilfe von dazu geeignet angeordneten Dehnmessstreifen. Bei dieser Art der Erfassung besteht jedoch ein Nachteil in der Schwierigkeit einer korrekten und störungsfreien Übertragung des Messsignals vom rotierenden Messort.

Für eine weitere Art der Drehmomentermittlung sei auf die DE 37 08 103 A1 verwiesen. Die dortige Figur 7 zeigt beispielsweise eine Vorrichtung zur Erfassung der Torsion einer Welle. Ein ringförmiges Stellglied ist dazu axial verschieblich auf einer Welle angeordnet und ist beidends jeweils durch eine elastische Helixstruktur (mit entgegengesetzter Windung) mit axial voneinander beabstandeten Bereichen der Welle verbunden. Eine durch ein von der Welle übertragenes Drehmoment verursachte Torsion der Welle führt zu einer Verschiebung des mittigen Stellglieds in axialer Richtung. Die Verschiebung nimmt dabei mit zunehmender Torsion zu bzw. mit abnehmender Torsion ab, so dass der Grad der Verschiebung des Stellglieds als Maß für die Torsion angesehen werden kann. Durch eine sensorische, beispielsweise induktive Erfassung der Verschiebung des Stellglieds lassen sich auf diese Weise die Torsion der Welle sowie ein mit der Welle übertragenes Drehmoment ermitteln.

Für zahlreiche Steuer- und Regelvorgänge an landwirtschaftlichen Maschinen ist es in der Praxis oftmals wünschenswert, nicht nur das mit einem Maschinenelement übertragene Drehmoment, sondern daneben auch dessen Drehzahl zu kennen. Bislang erfolgt die Drehzahlermittlung durch eine eigenständige Sensorik (Drehzahlsensor). Dies erfordert Bauraum und verursacht aufgrund der erforderlichen Messtechnik nicht unerhebliche Kosten.

Es ist eine Aufgabe der vorliegenden Erfindung eine Vorrichtung zur Erfassung des mechanischen Zustands eines drehbaren Maschinenelements anzugeben, die bei verhältnismäßig kompakter Bauweise und geringem konstruktiven Aufwand neben einer Drehmomentermittlung auch eine Drehzahlermittlung des Maschinenelements ermöglicht.

Die Aufgabe wird gelöst durch eine Vorrichtung gemäß den Merkmalen des Anspruchs 1. Diese zeichnet sich dadurch aus, dass dem einen Stellglied eine Markierung zugeordnet ist, die sich von dem Sensor zur Erfassung der axialen Verschiebung des einen Stellglieds erfassen lässt, wobei sich aus der Anzahl erfasster Markierungen pro Zeit eine Drehzahl des Maschinenelements ermitteln lässt und dass die Markierung so gestaltet ist, dass sich aus den Messsignalen des Sensors sowohl die axiale Verschiebung des Stellglieds als auch die Drehzahl des Maschinenelements ermitteln lassen.

Erfindungsgemäß wurde dabei erkannt, dass sich mit konstruktiv einfachen Mitteln neben einer Erfassung der Torsion des Maschinenelements auch eine Erfassung der Drehzahl verwirklichen lässt, wenn nämlich dem Stellglied, dessen axiale Verschiebung zur Ermittlung der Torsion des Maschinenelements erfasst wird, eine von demselben Sensor erfassbare Markierung zugeordnet ist, die zusätzlich eine Drehzahlermittlung ermöglicht. Bei der Markierung kann es sich grundsätzlich um jedwede Art von Kennzeichnung handeln, die sich vom Sensor zum Zweck der Drehzahlermittlung erfassen lässt. Zweckmäßigerweise befindet sich die Markierung dazu an einem Umfangsbereich des Stellglieds. Eine derartige Anordnung ermöglicht, dass sich aus einem vom Sensor erzeugten Messsignal nicht nur Informationen über die axiale Verschiebung des Stellglieds, sondern auch Informationen über die Drehzahl des Maschinenelements ableiten lassen. Ist dem Stellglied an einem Umfangsbereich beispielweise eine Markierung zugeordnet, so wird diese mit jeder vollen Umdrehung des Maschinenelements genau einmal vom Sensor erfasst. Ein zu berechnender Kehrwert der Zeitdauer für eine volle Umdrehung entspricht dann der Drehzahl des Maschinenelements.

Es ist denkbar, dem Stellglied nicht nur eine wie zuvor beschriebene Markierung, sondern eine Vielzahl von über den Umfang verteilten Markierungen zuzuordnen. Durch eine höhere Anzahl von Markierungen lässt sich aufgrund der kleineren und häufigeren Messintervalle die Genauigkeit der Messung insbesondere bei verhältnismäßig geringen Drehzahlen erhöhen.

Hierbei ist die Markierung so gestaltet, dass sich aus den Messsignalen des Sensors sowohl die axiale Verschiebung des Stellglieds als auch die Drehzahl des Maschinenelements ermitteln
lassen. Mit anderen Worten ist die Markierung so ausgebildet, dass sich daraus zwei Arten von Informationen, nämlich die Torsion (korrespondierend mit der
Häufigkeit erfasster Markierungen) ableiten lassen. Dies kann auf technisch unterschiedliche Weise umgesetzt werden.

Eine bevorzugte Ausgestaltungsmöglichkeit sieht vor, dass eine Markierung durch ein dem Stellglied zugeordnetes sensorisch erfassbares Merkmal gebildet wird. Das Merkmal kann grundsätzlich unterschiedlich gestaltet sein, um eine geeignete Erfassung zu ermöglichen, beispielsweise durch eine optisch erfassbare Oberflächengestaltung des Stellglieds (z.B. eine dreieckähnliche Aussparung und/oder farbige Gestaltung der Oberfläche des Stellglieds), durch eine zumindest bereichsweise Magnetisierung des Stellglieds und/oder durch eine sonstige physikalisch erfassbare Gestaltung. Zur Vermeidung von Reibungsverlusten kommen dabei bevorzugt berührungslose Erfassungsprinzipien zum Einsatz. Zweckmäßigerweise handelt es sich bei dem Sensor um einen zur jeweiligen Erfassung des Merkmals geeigneten Sensor, wie beispielsweise um einen optischen, magnetischen, kapazitiven und/oder elektrischen Sensor. Es sind verschiedene Möglichkeiten der Erfassung denkbar, solange gewährleistet ist, dass sich damit sowohl die axiale Verschiebung des Stellglieds als auch die Drehzahl des Maschinenelements erfassen lassen.

Zweckmäßig ist das vorteilhaft vorgesehene Merkmal an einer Umfangsfläche des Stellglieds ausgebildet und weist bezogen auf eine Axialrichtung eine sich verjüngende umfängliche Ausdehnung auf, so dass ein beim Passieren des Sensors erzeugtes Messsignal, insbesondere dessen zeitliche Dauer, eine Information über die axiale Verschiebung des Stellglieds liefert. Auf besonders vorteilhafte Weise kann dabei das Merkmal sogar eine derartige Formgebung aufweisen, dass die Dauer des Messsignals in etwa proportional zu einer Torsion des Maschinenelements ist. Mit anderen Worten kann eine geeignete Formgebung des Merkmals somit eine nichtlineare axiale Verschiebung des Stellglieds kompensieren. Eine solche Formgebung lässt sich beispielsweise durch eine an dem Stellglied ausgebildete Aussparung und/oder durch sonstige oberflächenwirksame Merkmale erzielen.

Gemäß einer dazu alternativen Ausführungsform könnte die Verschiebung des Stellglieds mit Hilfe der sogenannten Speckle-Interferometrie ermittelt werden. Dazu wird die Oberfläche des Stellglieds beispielsweise mit Laser-Licht abgetastet, um eine axiale Verschiebung des Stellglieds anhand von Veränderungen von Lichtreflektionen an der rauhen Oberfläche des Stellglieds zu erfassen.

Damit sich aus den erzeugbaren Messsignalen eine nutzbare Information ableiten lässt, ist vorteilhaft eine Recheneinrichtung vorgesehen, die betreibbar ist, aus der zeitlichen Dauer des Messsignals ein auf das Maschinenelement wirkendes Torsionsmoment - und damit das von dem Maschinenelement übertragene Drehmoment - zu ermitteln.

Ergänzend oder alternativ ist vorteilhaft eine Recheneinrichtung vorgesehen, die betreibbar ist, aus der Anzahl erfasster Messsignale pro Zeit die Drehzahl des Maschinenelements zu ermitteln.

Gemäß einer vorteilhaften Anwendung der Vorrichtung ist die zuvor genannte Recheneinrichtung weiterhin betreibbar, durch Multiplikation von ermitteltem Torsionsmoment und ermittelter Drehzahl des Maschinenelements die durch das Maschinenelement übertragene mechanische Leistung zu ermitteln. In diesem Fall handelt es sich bei der beschriebenen Vorrichtung um eine besonders kompakte Leistungsmessvorrichtung, die mit nur einem Sensor sowohl Drehzahl, Drehmoment sowie übertragene Leistung eines Maschinenelements ermittelt.

In konstruktiver Hinsicht können verschiedene Mittel zur Wandlung einer Torsion des Maschinenelements in eine axiale Verschiebung des Stellglieds eingesetzt werden. Eine bevorzugte Weiterbildung sieht vor, dass das Stellglied als Hohlkörper, insbesondere als Hohlwellenkörper und/oder als Ringkörper, ausgebildet ist, durch den das Maschinenelement hindurchgeführt ist, wobei das Stellglied mittels einer elastischen Helixstruktur mit dem Maschinenelement verbunden ist. Dabei sorgt die elastische Helixstruktur, bei der im einfachsten Fall eine Spiralfeder zum Einsatz kommen kann, für die angestrebte Wandlung einer Torsion des Maschinenelements in einer axiale Verschiebung des Stellglieds. Da diese Wandlung rein mechanisch erfolgt, ist keine äußere Energieversorgung nötig. Weiterhin wird bereits bei einer verhältnismäßig geringen Torsion eine vergleichsweise starke und somit sensorisch leicht erfassbare axiale Auslenkung erzielt, da die Helixform - eine verhältnismäßig geringe Steigung der Helix vorausgesetzt - für eine Verstärkung der Rotationsbewegung (Torsion) in eine Translationsbewegung (axiale Verschiebung) sorgt; im weiteren Sinne kommt dabei ein Kniehebeleffekt zur Wirkung. Vorteilhaft sind das Stellglied und die elastische Helixstruktur als gemeinsamer Hohlkörper ausgebildet.

Eine konstruktiv günstige Weiterbildung sieht vor, dass das Stellglied in einer ersten Axialrichtung über eine linksgängige elastische Helixstruktur mit dem Maschinenelement verbunden ist und in einer der ersten Axialrichtung entgegengesetzten, zweiten Axialrichtung über eine rechtsgängige elastische Helixstruktur mit dem Maschinenelement verbunden ist. In diesem Fall ist das Stellglied demnach beidends über entgegengesetzt gängige Helixstrukturen mit dem Maschinenelement verbunden, woraus sich ein besonders genaues und auch symmetrisches (in beide Lastrichtungen gleichwirkendes) Reaktionsverhalten ergibt.

Die genannte Vorrichtung lässt sich für drehbare Maschinenelemente wie beispielsweise Wellen in unterschiedlichen Bereichen des Maschinenbaus nutzen. Als vorteilhaft ist insbesondere anzusehen, dass sich mit besonders kompakter Bauform und mit nur einem einzigen Sensor sowohl das von dem Maschinenelement übertragene Drehmoment als auch dessen Drehzahl ermitteln lassen.

Aufgrund der genannten Vorteile, sowie eines bestehenden Bedarfs nach einer einfachen und zuverlässigen Lösung bezieht sich die Erfindung auch auf eine landwirtschaftliche Arbeitsmaschine, insbesondere ein Fahrzeug, ein Anbaugerät, eine Erntemaschine oder dergleichen, die mit einer wie zuvor beschriebenen Vorrichtung ausgestattet ist. Als Maschinenelement im Sinne dieser Beschreibung kommen bevorzugt leistungsübertragende drehbare Bauteile wie insbesondere Wellen in Betracht.

Die Erfindung wird nachfolgend anhand eines Ausführungsbeispiels erläutert. Dazu sei auf die nachfolgende Zeichnung verwiesen. Darin zeigt:
- Fig. 1: eine vereinfachte Darstellung eines Ausführungsbeispiels einer erfindungsgemäßen Vorrichtung in Seitenansicht,
- Fig. 2: einen Teil der in Fig. 1 gezeigten Vorrichtung in perspektivischer Ansicht.

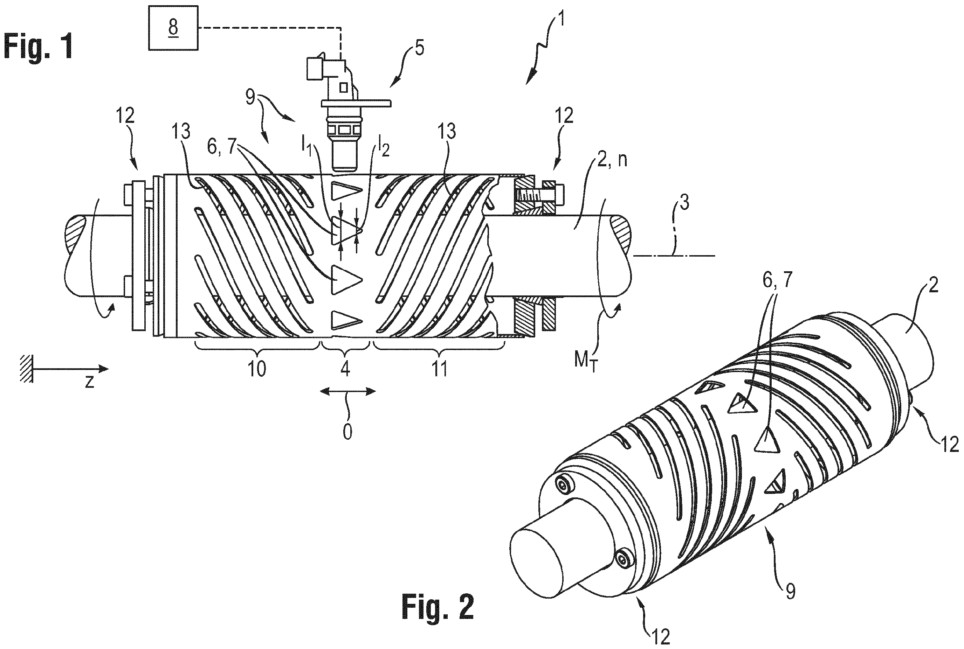

In Fig. 1 ist eine Vorrichtung 1 zur Erfassung des mechanischen Zustands einer Welle 2 gemäß einem Ausführungsbeispiel der Erfindung in Seitenansicht gezeigt. Eine durchgehende Welle 2 ist um eine Achse 3 drehbar, insbesondere um mechanische Antriebsleistung zwischen (hier nicht gezeigten) Maschinenkomponenten zu übertragen. Es kann sich beispielsweise um eine Welle innerhalb eines Antriebsstrangs (z.B. des Fahrantriebs) einer landwirtschaftlichen Arbeitsmaschine handeln.

In einem rotierenden Zustand, beispielsweise wenn die Welle 2 von einem Antriebsmotor direkt oder indirekt angetrieben wird, dreht sich diese mit einer Drehzahl n um die Achse 3. Wenn die Welle 2 dazu genutzt wird, eine weitere Maschinenkomponente anzutreiben, beispielweise ein dem Vortrieb eines Fahrzeugs dienendes Fahrzeugrad (oder einen beliebigen sonstigen Verbraucher), befindet sich die Welle 2 in einem mechanisch belasteten Zustand, da sie ein Drehmoment überträgt, das wiederum als Torsionsmoment M_{T} auf die Welle 2 rückwirkt. Das Torsionsmoment M_{T} führt dabei zu einer elastischen Verdrehung, d.h. einer Torsion, der Welle 2 um die Achse 3. Da eine elastische Torsion der Welle 2 proportional zum Torsionsmoment M_{T} ist, lässt sich durch eine Messung der Torsion der Welle 2 das Torsionsmoment M_{T} - und damit das von der Welle 2 übertragene Drehmoment ermitteln. Dieses Prinzip macht sich die erfindungsgemäße Vorrichtung 1 folgendermaßen zunutze:
Die Vorrichtung 1 weist Mittel 9, 10, 11, 12 auf, mit denen sich eine Torsion der Welle 2 in eine axiale Verschiebung eines axial auf der Welle 2 beweglichen Stellglieds 4 wandeln lässt. Im gezeigten Ausführungsbeispiel ist dazu an zwei axial voneinander beabstandeten Bereichen der Welle 2 jeweils eine drehfeste Befestigung 12 an der Welle 2 angeordnet. Zwischen diesen beiden Befestigungen 12 erstreckt sich ein Hohlkörper in Form einer Hohlwelle 9, die jeweils endseitig mittels einer der Befestigungen 12 mit der Welle 2 verbunden ist. Die Welle 2 ist dabei durch die Hohlwelle 9 hindurchgeführt, wobei die Hohlwelle 9 zumindest in einem zentralen Bereich einen Innendurchmesser aufweist, der zumindest geringfügig größer ist als ein dortiger Außendurchmesser der Welle 2, so dass dieser zentrale Bereich nicht mit der Mantelfläche der Welle 2 in Kontakt steht. Die Hohlwelle 9 gliedert sich bezogen auf eine Axialrichtung z in mehrere Abschnitte. An den jeweils endseitigen Abschnitten ist die Hohlwelle 9 - wie zuvor ausgeführt - mittels der Befestigungen 12 drehfest mit der Welle 2 verbunden. Dazwischen liegende Abschnitte 10, 4, 11 der Hohlwelle 9 sind aufgrund des größeren Innendurchmessers der Hohlwelle 9 von der Welle 2 beabstandet und können sich somit axial gegenüber der Welle 2 bewegen. Ein zentraler Abschnitt der Hohlwelle 9 wird von einem ringförmigen Stellglied 4 gebildet, das beidends jeweils an eine elastische Helixstruktur 10, 11 angrenzt und von dieser gehalten wird. Jeder der elastischen Helixstrukturen 10, 11 ist an deren von dem Stellglied 4 abgewandten Ende über je eine Befestigung 12 mit der Welle 2 verbunden.

Wie der Fig. 1 zu entnehmen, sind das Stellglied 4 und die elastischen Helixstrukturen 10, 11 als ein gemeinsamer Hohlkörper (Hohlwelle 9) ausgebildet. Dabei wird eine elastische Helixstruktur 10, 11 dadurch gebildet, dass in die zunächst geschlossene Mantelfläche der Hohlwelle 9 im betreffenden Abschnitt eine Vielzahl von länglichen, zueinander parallel, jedoch gegenüber der Axialrichtung z in einem spitzen Winkel verlaufende Ausnehmungen 13 eingearbeitet wird. Die zwischen den Ausnehmungen 13 verbleibenden Materialstege weisen dann in Bezug auf die Achse 3 einen helixförmigen (oder "spiralförmigen") Verlauf auf. Dabei haben die Helixstrukturen 10 und 11 eine zueinander entgegengesetzte Windung. Bezogen auf die angegebene Axialrichtung z ist das Stellglied 4 über eine linksgängige elastische Helixstruktur 11 mit der Welle 2 verbunden. In der entgegengesetzten Axialrichtung ("-z") ist das Stellglied 4 dagegen über eine rechtsgängige elastische Helixstruktur 10 mit der Welle 2 verbunden.

Jede der Helixstrukturen 10, 11 wirkt auf das axial bewegliche Stellglied 4 wie eine Vielzahl parallel geschaltete Spiralfedern. Bereits bei einer verhältnismäßig kleinen Torsion der Welle 2 verdrehen sich die beiden endseitigen Befestigungen 12 des Hohlkörpers 9 gegeneinander. Abhängig von der Richtung und dem Ausmaß dieser Verdrehung bewirken die einander entgegengesetzten Helixstrukturen 10, 11, die über das Stellglied 4 miteinander verbunden sind, eine axiale Verschiebung des beweglichen Stellglieds 4. Aus der Richtung (Nulllage durch "0" angegeben) und dem Ausmaß der axialen Verschiebung des Stellglieds 4 lassen sich somit Richtung und Ausmaß der Torsion der Welle 2 ablesen. Zu diesem Zweck umfasst die Vorrichtung 1 weiterhin einen ruhend angeordneten Sensor 5. Es kann sich hierbei grundsätzlich um jedweden Sensor handeln, der für den noch zu beschreibenden Einsatzweck geeignet ist, beispielsweise um einen optischen Sensor (z.B. Laser), kapazitiven Sensor, elektrischen Sensor, magnetischen Sensor oder dergleichen. Gemäß dem gezeigten bevorzugten Ausführungsbeispiel handelt es sich um einen magnetischen Sensor. Der Sensor 5 ist dazu geeignet, eine axiale Verschiebung des Stellglieds 4, welche aufgrund der erläuterten mechanischen Zusammenhänge mit dem auf die Welle 2 einwirkenden Torsionsmoment M_{T} korrespondiert, zu erfassen. Zugleich eignet sich der Sensor 5 dazu, eine Drehzahl n der Welle 2 zu erfassen. Um dies zu ermöglichen, ist dem Stellglied 4 eine besondere Art von Markierungen 6 zugeordnet, die sich von dem Sensor 5 erfassen lassen.

So ist das Stellglied 4 mit einer Vielzahl von Markierungen 6 versehen, die in gleichmäßigen Abständen über dessen Umfang verteilt sind. Eine Markierung 6 ist dabei durch eine besondere Formgebung so gestaltet, dass sich aus den Messsignalen des abtastenden Sensors 5 sowohl die axiale Verschiebung des Stellglieds 4 als auch die Drehzahl n der Welle 2 ermitteln lassen. Im gezeigten Beispiel wird eine Markierung 6 jeweils durch eine annähernd dreieckförmige Materialaussparung 7 in der Mantelfläche des Hohlkörpers 9 gebildet. Die Aussparung 7 hat die Grundform eines gleichschenkligen (unter Berücksichtigung der Wölbung: "gewölbten") Dreiecks, dessen Basis in einer Radialebene bezogen auf die Achse 3 verläuft. Demnach weist die Aussparung 7 eine bezogen auf die Axialrichtung z sich verjüngende umfängliche Ausdehnung I auf. Dies wird in Fig. 1 durch die Maßangeben I₁ und I₂ verdeutlicht, wonach sich die umfängliche Ausdehnung I der Ausnehmungen 7 von einem größeren Wert I₁ mit zunehmender Axialrichtung z auf einen demgegenüber kleineren Wert I₂ verringert. Der Effekt dieser Gestaltung der Ausnehmung 7 ist, dass ein vom Sensor 5 erzeugtes Messsignal, das beim Passieren des Sensors 5 von einer Markierung 6 bzw. Aussparung 7 während des Umlaufs der Welle 2 entsteht, eine unterschiedlich lange Dauer aufweist. Somit liefert die Dauer des bei Durchlauf einer Markierung 6 erzeugten Messsignals des Sensors 5 eine Information darüber, ob, in welchem Maße und in welche Richtung eine axiale Verschiebung des Stellglieds 4 stattgefunden hat. Aufgrund der besonderen Formgebung der Markierung 6 lässt sich also aus der Dauer des Messsignals auf den Grad der Torsion der Welle 2 schließen.

Verschiedene Formgebungen für die Ausnehmungen 7 sind denkbar. Gemäß einer vorteilhaften Weiterbildung der Erfindung kann die Formgebung so gestaltet sein, dass die Dauer des Messsignals etwa proportional zu einer Torsion des Maschinenelements ist. In diesem Fall könnte die Formgebung der Ausnehmung 7 vorteilhaft eine möglicherweise vorliegende Nichtlinearität der Axialverschiebung des Stellglieds 4 kompensieren.

Zur Ermittlung des Torsionsmoments M_{T} dient eine von dem Sensor 5 mit Messsignalen versorgte Recheneinrichtung 8. Diese ist betreibbar, aus der zeitlichen Dauer des Messsignals ein auf die Welle 2 wirkendes Torsionsmoment M_{T} zu ermitteln.

Zugleich ist die Recheneinrichtung 8 betreibbar, aus der mit den Sensor 5 erfassten Anzahl von Messsignalen pro Zeit die Drehzahl n der Welle 2 zu ermitteln. Erfindungsgemäß lassen sich mit dem einen (einzigen) Sensor 5 der Vorrichtung 1 somit sowohl das Torsionsmoment M_{T} als auch die Drehzahl n der Welle 2 ermitteln.

Es kann vorgesehen sein, dass die Recheneinrichtung 8 weiterhin eine Multiplikation von Torsionsmoment M_{T} und Drehzahl n der Welle 2 durchführt, um die über die Welle 2 übertragene mechanische Leistung zu ermitteln. In diesem Fall ist die Vorrichtung 1 demnach als Leistungssensor nutzbar.

In Fig. 2 ist ein Teil der bereits anhand von Fig. 1 erläuterten Vorrichtung 1, nämlich unter Weglassung des Sensors 5, in perspektivischer Ansicht dargestellt. Es zeigt sich, dass die Welle 2 mit der daran befestigten Hohlwelle 9 zu einer verhältnismäßig kompakten und robusten Baugruppe montierbar ist. Die Welle 2 ist durch das Vorhandensein der umgebenden Hohlwelle 9 praktisch nicht geschwächt. Die Befestigungen 12 können beispielsweise auf die Welle 2 aufgeschrumpft sein.

### Bezugszeichenliste

- 1: Vorrichtung
- 2: Welle
- 3: Achse
- 4: Stellglied
- 5: Sensor
- 6: Markierung
- 7: Aussparung
- 8: Rechner
- 9: Hohlwelle
- 10: rechtsgängige Helix
- 11: linksgängige Helix
- 12: Befestigung
- 13: längliche Ausnehmung

- I₁, I₂: umfängliche Ausdehnung
- n: Drehzahl
- M_{T}: Torsionsmoment

## Patentansprüche

1. Vorrichtung (1) zur Erfassung des mechanischen Zustands eines um eine Achse (3) drehbaren Maschinenelements, insbesondere einer Welle (2), umfassend ein am Maschinenelement (2) axial beweglich angeordnetes Stellglied (4), Mittel (9, 10, 11, 12) zur Wandlung einer Torsion des Maschinenelements (2) in eine axiale Verschiebung des Stellglieds (4), und einen gegenüber dem Maschinenelement (2) ruhend angeordneten Sensor (5) zur Erfassung der axialen Verschiebung des Stellglieds (4), **dadurch gekennzeichnet, dass** dem einen Stellglied (4) eine Markierung (6) zugeordnet ist, die sich von dem Sensor (5) zur Erfassung der axialen Verschiebung des einen Stellglieds (4) erfassen lässt, wobei sich aus der Anzahl erfasster Markierungen (6) pro Zeit eine Drehzahl (n) des Maschinenelements (2) ermitteln lässt und dass die Markierung (6) so gestaltet ist, dass sich aus den Messsignalen des Sensors (5) sowohl die axiale Verschiebung des Stellglieds (4) als auch die Drehzahl (n) des Maschinenelements ermitteln lassen.

2. Vorrichtung (1) nach Anspruch 1, **dadurch gekennzeichnet, dass** dem Stellglied (4) eine Vielzahl von über den Umfang verteilten Markierungen (6) zugeordnet ist.

3. Vorrichtung (1) nach einem der vorigen Ansprüche, **dadurch gekennzeichnet, dass** eine Markierung (6) durch ein dem Stellglied (4) zugeordnetes sensorisch erfassbares Merkmal, insbesondere durch eine optisch erfassbare Oberflächengestaltung (7) des Stellglieds (4), durch eine zumindest bereichsweise Magnetisierung des Stellglieds (4) und/oder durch sonstige physikalisch erfassbare Eigenschaften des Stellglieds (4), gebildet wird.

4. Vorrichtung (1) nach Anspruch 3, **dadurch gekennzeichnet, dass** das Merkmal (7) an einer Umfangsfläche des Stellglieds (4) ausgebildet ist und bezogen auf eine Axialrichtung (z) eine sich verjüngende umfängliche Ausdehnung (I) aufweist, so dass eine Dauer des Messsignals eine Information über die axiale Verschiebung des Stellglieds (4) liefert.

5. Vorrichtung (1) nach Anspruch 3 oder 4, **dadurch gekennzeichnet, dass** das Merkmal (7) eine derartige Formgebung aufweist, dass die Dauer des Messsignals etwa proportional zu einer Torsion des Maschinenelements ist.

6. Vorrichtung (1) nach einem der vorigen Ansprüche, **dadurch gekennzeichnet, dass** eine Recheneinrichtung (8) vorgesehen ist, die betreibbar ist, aus dem Messsignal, insbesondere aus dessen zeitlicher Dauer, ein auf das Maschinenelement (2) wirkendes Torsionsmoment (MT) zu ermitteln.

7. Vorrichtung (1) nach einem der vorigen Ansprüche, **dadurch gekennzeichnet, dass** eine Recheneinrichtung (8) vorgesehen ist, die betreibbar ist, aus der Anzahl erfasster Messsignale pro Zeit die Drehzahl (n) des Maschinenelements (2) zu ermitteln.

8. Vorrichtung (1) nach Anspruch 6 oder 7, **dadurch gekennzeichnet, dass** die Recheneinrichtung (8) betreibbar ist, durch Multiplikation von Torsionsmoment (MT) und Drehzahl (n) des Maschinenelements (2) die durch das Maschinenelement (2) übertragene mechanische Leistung zu ermitteln.

9. Vorrichtung (1) nach einem der vorigen Ansprüche, **dadurch gekennzeichnet, dass** das Stellglied (4) als Hohlkörper, insbesondere als Hohlwellenkörper (9) und/oder als Ringkörper, ausgebildet ist, durch den das Maschinenelement (2) hindurchgeführt ist, wobei das Stellglied (4) mittels einer elastischen Helixstruktur (10, 11) mit dem Maschinenelement (2) verbunden ist.

10. Vorrichtung (1) nach Anspruch 9, **dadurch gekennzeichnet, dass** das Stellglied (4) und die elastische Helixstruktur (10, 11) als gemeinsamer Hohlkörper (9) ausgebildet sind.

11. Vorrichtung (1) nach einem der vorigen Ansprüche, **dadurch gekennzeichnet, dass** das Stellglied (4) in einer ersten Axialrichtung (z) über eine linksgängige elastische Helixstruktur (11) mit dem Maschinenelement (2) verbunden ist und in einer der ersten Axialrichtung (z) entgegengesetzten, zweiten Axialrichtung (-z) über eine rechtsgängige elastische Helixstruktur (10) mit dem Maschinenelement (2) verbunden ist.

12. Landwirtschaftliche Arbeitsmaschine, insbesondere Fahrzeug, Anbaugerät, Erntemaschine oder dergleichen, mit einer Vorrichtung (1) gemäß Anspruch 1.

## Claims

1. A device (1) for detecting the mechanical status of a machine element rotatable about an axis (3), in particular a shaft (2), including an actuating member (4) arranged axially moveably on the machine element (2), means (9, 10, 11, 12) for converting a torsion of the machine element (2) into an axial displacement of the actuating member (4), and a sensor (5) arranged stationarily relative to the machine element (2) for detecting the axial displacement of the actuating member (4), **characterised in that** associated with the one actuating member (4) is a marking (6) which can be detected by the sensor (5) for detecting the axial displacement of the one actuating member (4), wherein a rotary speed (n) of the machine element (2) can be ascertained from the number of detected markings (6) in relation to time and that the marking (6) is of such a configuration that both the axial displacement of the actuating member (4) and also the rotary speed (n) of the machine element can be ascertained from the measurement signals from the sensor (5).

2. A device (1) according to claim 1 **characterised in that** a plurality of markings (6) distributed over the periphery is associated with the actuating member (4).

3. A device (1) according to one of the preceding claims **characterised in that** a marking (6) is formed by a feature which is associated with the actuating member (4) and which can be detected by sensor means, in particular an optically detectable surface configuration (7) of the actuating member (4), at least region-wise magnetisation of the actuating member (4), and/or by other physically detectable properties of the actuating member (4).

4. A device (1) according to claim 3 **characterised in that** the feature (7) is provided at a peripheral surface of the actuating member (4) and in relation to an axial direction (z) is of a tapering peripheral extent (I) so that a duration of the measurement signal supplies information about the axial displacement of the actuating member (4).

5. A device (1) according to claim 3 or claim 4 **characterised in that** the feature (7) is of such a shape that the duration of the measurement signal is approximately proportional to a torsion of the machine element.

6. A device (1) according to one of the preceding claims **characterised in that** there is provided a computing device (8) operable to ascertain from the measurement signal, in particular the time duration thereof, a torsion moment (MT) acting on the machine element (2).

7. A device (1) according to one of the preceding claims **characterised in that** there is provided a computing device (8) operable to ascertain the rotary speed (n) of the machine element (2) from the number of detected measurement signals.

8. A device (1) according to claim 6 or claim 7 **characterised in that** the computing device (8) is operable to ascertain the mechanical power transmitted by the machine element (2) by multiplication of the torsion moment (MT) and the rotary speed (n) of the machine element (2).

9. A device (1) according to one of the preceding claims **characterised in that** the actuating member (4) is in the form of a hollow body, in particular a hollow shaft body (9) and/or an annular body, through which the machine element (2) is passed, wherein the actuating member (4) is connected to the machine element (2) by means of an elastic helix structure (10, 11).

10. A device (1) according to claim 9 **characterised in that** the actuating member (4) and the elastic helix structure (10, 11) are in the form of a common hollow body (9).

11. A device (1) according to one of the preceding claims **characterised in that** the actuating member (4) is connected to the machine element (2) in a first axial direction (z) by way of a left-hand elastic helix structure (11) and connected to the machine element (2) in a second axial direction (-z) opposite to the first axial direction (z) by way of a right-hand elastic helix structure (10).

12. An agricultural working machine, in particular a vehicle, attachment, harvester or the like, comprising a device (1) according to claim 1.

## Revendications

1. Dispositif (1) pour détecter un état mécanique d'un élément de machine, en particulier d'un arbre (2), tournant autour d'un axe (3), comprenant un actionneur (4) disposé avec une possibilité de déplacement axial sur l'élément de machine (2), des moyens (9, 10, 11, 12) pour convertir une torsion de l'élément de machine (2) en une translation axiale de l'actionneur (4), et un capteur (5) disposé fixe par rapport à l'élément de machine (2) pour détecter la translation axiale de l'actionneur (4), **caractérisé en ce qu'**à l'actionneur (4) est associée une marque (6) qui peut être détectée par le capteur (5) pour détecter une translation axiale de l'actionneur (4), une vitesse de rotation (n) de l'élément de machine (2) pouvant être déterminée à partir du nombre de marques (6) détectées par unité de temps, et **en ce que** la marque (6) est conçue de façon qu'il soit possible de déterminer, à partir des signaux de mesure du capteur (5), aussi bien la translation axiale de l'actionneur (4) que la vitesse de rotation (n) de l'élément de machine.

2. Dispositif (1) selon la revendication 1, **caractérisé en ce qu'**à l'actionneur (4) est associée une pluralité de marques (6) réparties sur la périphérie.

3. Dispositif (1) selon une des revendications précédentes, **caractérisé en ce qu'**une marque (6) est formée par un repère détectable par capteur, associé à l'actionneur (4), en particulier par une configuration superficielle détectable optiquement (7) de l'actionneur (4), par une magnétisation au moins par endroits de l'actionneur (4) et/ou par d'autres propriétés détectables physiquement de l'actionneur (4).

4. Dispositif (1) selon la revendication 3, **caractérisé en ce que** le repère (7) est ménagé sur une surface périphérique de l'actionneur (4) et présente une extension périphérique effilée (1) par rapport à une direction axiale (z), de sorte qu'une durée du signal de mesure fournit une information sur la translation axiale de l'actionneur (4).

5. Dispositif (1) selon la revendication 3 ou 4, **caractérisé en ce que** le repère (7) présente une conformation telle que la durée du signal de mesure est sensiblement proportionnelle à une torsion de l'élément de machine.

6. Dispositif (1) selon une des revendications précédentes, **caractérisé en ce qu'**il est prévu un équipement de comptage (8) qui est exploitable pour déterminer, à partir du signal de mesure, en particulier à partir de sa durée temporelle, un moment de torsion (MT) agissant sur l'élément de machine (2).

7. Dispositif (1) selon une des revendications précédentes, **caractérisé en ce qu'**il est prévu un équipement de comptage (8) qui est exploitable pour déterminer, à partir du nombre de signaux de mesure captés par unité de temps, la vitesse de rotation (n) de l'élément de machine (2).

8. Dispositif 1 selon la revendication 6 ou 7, **caractérisé en ce que** l'équipement de comptage (8) est exploitable pour déterminer, par multiplication du moment de torsion (MT) et de la vitesse de rotation (n) de l'élément de machine (2), la puissance mécanique transmise par l'élément de machine (2).

9. Dispositif (1) selon une des revendications précédentes, **caractérisé en ce que** l'actionneur (4) est conformé en corps creux, en particulier en corps d'arbre creux (9) et/ou en corps annulaire, à travers lequel passe l'élément de machine (2), l'actionneur (4) étant relié à l'élément de machine (2) au moyen d'une structure élastique hélicoïdale (10, 11).

10. Dispositif (1) selon la revendication 9, **caractérisé en ce que** l'actionneur (4) et la structure élastique hélicoïdale (10, 11) sont conformés en un corps creux commun (9).

11. Dispositif (1) selon une des revendications précédentes, **caractérisé en ce que** l'actionneur (4) est relié à l'élément de machine (2), dans une première direction axiale (z), par l'intermédiaire d'une structure élastique hélicoïdale à gauche (11) et, dans une seconde direction axiale (-z) opposée à la première direction axiale (z), par l'intermédiaire d'une structure élastique hélicoïdale à droite (10).

12. Machine de travail agricole, en particulier véhicule, outil rapporté, machine de récolte ou analogue, comprenant un dispositif (1) selon la revendication 1.
